# EUROPÄISCHE PATENTSCHRIFT

(11) **EP 0 533 999 B1**
(45) Veröffentlichungstag und Bekanntmachung des Hinweises auf die Patenterteilung: **17.04.1996**
(21) Anmeldenummer: 91117793.9
(22) Anmeldetag: 18.10.1991
(51) Int. Cl.: F16L 55/162

(54) **Verfahren zum Abdichten von Kanalrohren**
Method for sealing pipelines
Procédé pour l'étanchement de tuyaux

(30) Priorität: 26.09.1991 DE 4131997
(43) Veröffentlichungstag der Anmeldung: 31.03.1993
(73) Patentinhaber: PANSE WETZLAR VERMÖGENSVERWALTUNG GmbH, D-35641 Schöffengrund (DE)
(72) Erfinder: Schmidt, Wilhelm, W-6331 Schöffengrund/OT Schwalbach (DE); Winkler, Alfred, W-6330 Wetzlar (DE)
(74) Vertreter: Knefel, Siegfried, Dipl.-Math.

(56) Entgegenhaltungen:
- EP-A- 0 126 647
- DE-U- 9 111 976
- US-A- 3 985 688
- US-A- 4 861 248

## Beschreibung

Die Erfindung betrifft ein Verfahren zum Abdichten von Kanalrohren mit Hilfe eines Packers.

Nach dem Stand der Technik werden zwei verschiedene Verfahren angewendet.

Beim ersten Verfahren (Cherne-Verfahren) trägt der Packer auf seinen Endteilen und auf seinem Mittelteil je eine Gummimanschette. Die Gummimanschetten sind getrennt voneinander aufblasbar. Dieser Packer wird an die abzudichtende Stelle, beispielsweise zu einer Muffe des Kanalrohres gebracht, derart, daß die Endteile des Packers vor und hinter der abzudichtenden Stelle liegen. Die Gummimanschetten auf den Endteilen werden nunmehr aufgeblasen, bis sie mit dem Kanalrohr dicht abschließen, so daß ein Ringraum an der abzudichtenden Stelle gebildet wird. Anschließend wird das Dichtungsmaterial, das eine relativ große Viskosität aufweist, in den Ringraum eingefüllt, und der Ringraum wird durch nachfolgendes Aufblasen der Gummimanschette des Mittelteils des Packers verkleinert. Durch diesen gesonderten Aufblasvorgang wird das Dichtungsmaterial an die Rohrwandung und in die Ritzen, Lecks und dergleichen gepreßt. Nach Abbinden des üblicherweise mehrkomponentigen Dichtungsmaterials wird die Luft aus den Gummimanschetten des Mittelteils und der Endteile des Packers herausgelassen, so daß dieser lose im Kanalrohr liegt und an die nächste abzudichtende Stelle im Rohr gebracht werden kann.

In der US-A-3,985,688 ist ein Packer beschrieben, der nach dem Cherne-Verfahren arbeitet. Dieser Packer ist dreiteilig ausgebildet. Jeder Teil ist getrennt aufblasbar. Der Packer wird derart aufgeblasen, daß die äußeren Teile mit der Rohrwandung abschließen. Anschließend wird das Material in den verbleibenden Ringraum eingebracht. Nach Einbringen des Dichtungsmaterials wird der mittlere Teil ebenfalls aufgeblasen, um das Material in die Ritzen und Öffnungen der Rohrwandungen zu pressen.

Dieses Verfahren erfordert durch die sukzessive erfolgenden Arbeitsschritte des Aufblasens, Einfüllens des Dichtungsmaterials und Verkleinern des Ringraumes eine relativ lange Zeit für das Ausbessern einer undichten Stelle im Kanalrohr.

Beim zweiten Verfahren (Penetryn-Posatryn-Verfahren) weist der Packer auf seinen Endteilen je eine Manschette auf, die zu beiden Seiten der abzudichtenden Stelle aufgeblasen werden. Schließen die Gummimanschetten dicht mit dem Kanalrohr ab, wird das Dichtungsmaterial, welches bei diesem Verfahren von relativ niedriger Viskosität ist, mit hohem Druck in den Ringraum zwischen den Manschetten gepreßt. Das Dichtungsmaterial setzt sich aufgrund des Druckes in die Ritzen und Lecks.

Gemäß der US-A-4,861,248 ist ein Packer bekannt, bei dem der Mittelteil verstärkt ist, so daß er sich weniger ausdehnt als die seitlichen Teile. In den verbleibenden Ringraum wird, nachdem sich der Packer vollständig ausgedehnt hat, ein Zweikomponenten-Dichtungsmaterial eingeführt. Nach Aushärtung dieses Dichtungsmaterials wird die Luft aus dem Packer herausgelassen, so daß der Packer trotz der Dichtungswulst aus dem Rohr herausgezogen werden kann.

Da der Ringraum relativ groß ist und in dieser Form mit Dichtungsmaterial ausgefüllt wird, ist dieses Verfahren mit einem großen Materialverbrauch verbunden. Von diesem Dichtungsmaterial kommt nur ein geringer Teil der eigentlichen Abdichtung zugute. Der Rest des Dichtungsmaterials bildet eine nicht erforderliche Wulst an der Rohrinnenwand. Diese Wulst stellt darüber hinaus eine Behinderung beim Durchfluß des Abwassers dar und wird mit der Zeit von dem durchfließenden Wasser abgetragen.

Dieser hohe Materialverbrauch wirkt sich extrem nachteilig auf die Kosten der Rohrsanierung aus, da das Dichtungsmaterial sehr teuer ist.

Aufgabe der Erfindung ist es, ein Verfahren zum Abdichten von Kanalrohren anzugeben, bei dem das Dichtungsmaterial unter Materialeinsparung und Zeiteinsparung in das Leck, in die Muffe oder dergleichen eingepreßt wird.

Diese Aufgabe wird durch das Verfahren des Anspruches 1 gelöst.

Dadurch, daß bei dem erfindungsgemäßen Verfahren die den Ringraum begrenzenden äußeren Manschettenteile des Packers über einen mittleren Manschettenteil miteinander verbunden sind, und dadurch, daß sich der mittlere Manschettenteil bei gleicher Druckbeaufschlagung weniger ausdehnt als die äußeren Manschettenteile, kann schon während des Aufblasvorganges Dichtungsmaterial in den Ringraum eingebracht werden, sobald die äußeren Manschettenteile dicht mit der Rohrwandung abschließen.

Dadurch, daß der mittlere Manschettenteil während des Einfüllens des Dichtungsmaterials weiter aufgeblasen wird und somit den Ringraum verkleinert, wird der Materialverbrauch bei dem erfindungsgemäßen Verfahren sehr gering gehalten.

Ein weiterer Vorteil der Erfindung wird darin gesehen, daß durch das gleichzeitige Aufblasen der Gummimanschette und Einfüllen des Dichtungsmaterials nur noch ein Arbeitsschritt erforderlich ist, was zu einer erheblichen Zeiteinsparung führt. Dieses macht sich bei mehreren hundert Leckausbesserungen pro Tag in großem Umfang vorteilhaft bemerkbar.

Das Dichtungsmaterial, das bei dem erfindungsgemäßen Verfahren relativ dünnflüssig ist, wird mit Hilfe von wenigstens zwei Schlauchleitungen zu einer Mischvorrichtung im mittleren Manschettenteil des Packers geführt. Der mittlere Manschettenteil weist wenigstens eine Durchflußöffnung auf, durch die das Dichtungsmaterial in den Ringraum gepreßt werden kann. Besteht das Dichtungsmaterial aus einem Zweikomponentenkleber, so können die Komponenten getrennt durch die Schlauchleitungen der Mischvorrichtung zugeführt werden, wo sie vermischt werden. Nach dem Einpressen in den Ringraum und somit in die abzudichtenden Stellen bindet das Dichtungsmaterial ab.

Dadurch, daß eine Mischvorrichtung für das Dichtungsmaterial und somit nur eine Durchflußöffnung im mittleren Manschettenteil vorgesehen ist, ist das Gummimaterial im Öffnungsbereich elastischer als dieses beispielsweise bei zwei Öffnungen und einer Vermischung erstim Ringraum der Fall wäre.

Die eingeschränkte Ausdehnung des mittleren Manschettenteils wird zweckmäßig dadurch erreicht, daß in der Gummimanschette eine Einlage aus einem Fadengeflecht, vorzugsweise aus einem mehrlagigen Fadengeflecht, beispielsweise ein Kunststoffgeflecht vorgesehen ist, das die radiale Dehnbarkeit der Gummimanschette vermindert. Vorteilhaft kreuzen sich die Fäden des Geflechtes und sind schrägliegend zu den Mantellinien der Manschette angeordnet.

Dadurch, daß die mittlere Gummimanschette während des Einfüllens des Dichtungsmaterials in den Ringraum weiter aufgeblasen wird und somit den Ringraum während des Einfüllens ständig verkleinert, wird das Dichtungsmaterial an, in und/oder durch die abzudichtenden Stellen gepreßt, derart, daß nur noch eine geringfügige Wulst an der Rohrinnenwandung verbleibt.

Der Packer ist vorteilhaft an seinen Enden offen und innen hohl ausgestaltet, damit während des Ausbesserungsvorganges das Abwasser weiterhin durch das Kanalrohr und den Packer fließen kann.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: einen Längsschnitt durch einen Packer mit teilweise aufgeblasener Manschette;
- Fig. 2: einen Schnitt nach der Linie II-II bei vollständig aufgeblasener Manschette;
- Fig. 3: einen Längsschnitt durch einen Packer mit nicht aufgeblasener Manschette;
- Fig. 4: eine Darstellung zur Erläuterung der Wirkungsweise.

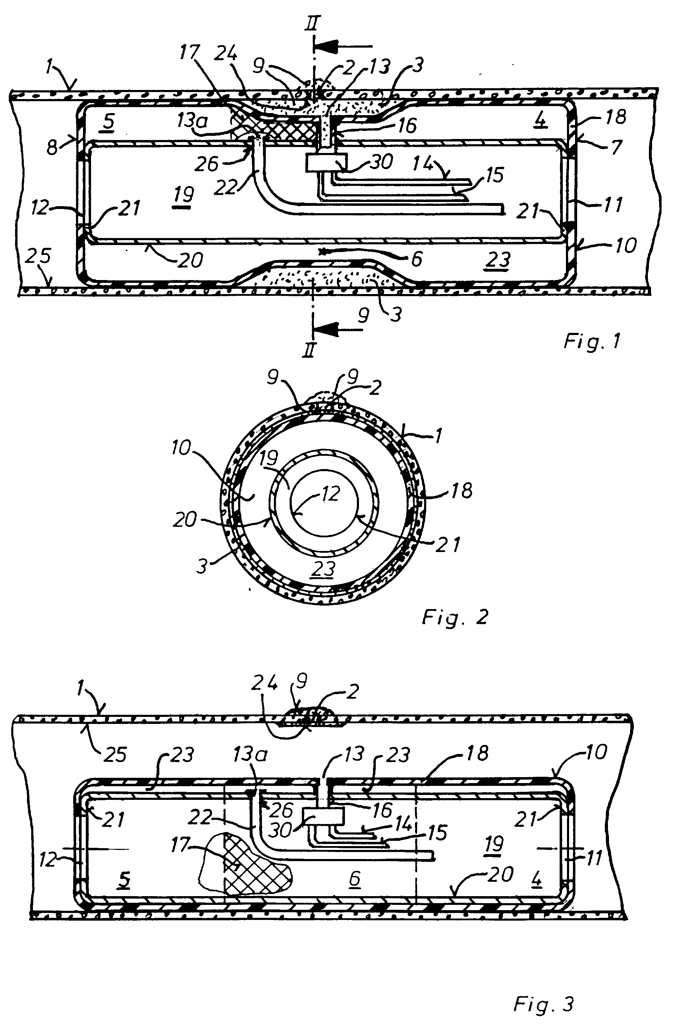

Gemäß Fig. 1 besteht der Packer (10) aus einem zylindrischen Stahlkörper (20), an dessen Enden Kragen (21) vorgesehen sind, in die die Wülste einer dehnbaren Manschette (Gummimanschette (18)) eingelagert sind. In den Raum (23) zwischen Stahlkörper (20) und Gummimanschette (18) kann mit Hilfe eines Schlauches (22) durch eine Öffnung (26) Luft eingeblasen werden, so daß sich die Manschette (18) dehnt.

Die Manschette besteht aus drei ineinander übergehenden Teilen (4, 5, 6), von denen die Teile (4, 5) außen liegen und den Teil (6) zwischen sich einschließen.

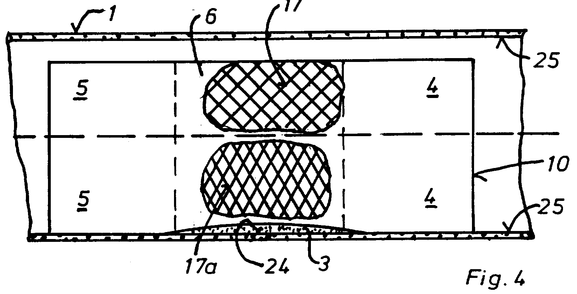

Im mittleren Teil (6) ist, wie aus Fig. 4 zu erkennen ist, ein Fadennetz (17) eingelagert, beispielsweise aus Kunststoffäden. Die Fäden kreuzen sich derart, daß sie schräg zur Mantellinie der nicht aufgeblasenen Manschette liegen. Wird die Manschette aufgeblasen, dehnt sich die Gummimanschette radial nach außen aus, wie in Fig. 4 im unteren Teil der Figur dargestellt ist. Die äußeren Manschettenteile (4, 5) legen sich hierbei an die Innenwandung (25) eines abzudichtenden Kanalrohres (1) an. Der mittlere Manschettenteil (6) dehnt sich durch das eingelagerte Netz nur zögernd aus, beispielsweise wie im unteren Teil der Fig. 4 dargestellt. Die Fadeneinlage (17) streckt sich hierbei in die Lage (17a). Hierdurch entsteht zwischen der Innenwandung (25) des Kanalrohres (1) und der Außenfläche der Manschette ein ringförmiger Raum (3). Bei weiterem Einblasen von Luft in den Raum (23) verkleinert sich der ringförmige Raum (3), bis schließlich auch der mittlere Manschettenteil (6) die Innenwandung (25) des Kanalrohres erreicht.

Durch den Stahlkörper (20) und die Gummimanschette (18) greift im Bereich des mittleren Manschettenteils (6) eine Schlauchleitung (16). Die Leitung (16) zwischen der Öffnung (13) der Manschette (18) und der Öffnung (13a) des Stahlkörpers (20) ist mit einer Vorratslänge im Raum (4) angelagert, damit sie die Dehnung des mittleren Teils (6) beim Aufblasen der Manschette (18) mitmachen kann.

Durch die Leitungen (14, 15) können Komponenten zum Beispiel eines Zweikomponentendichtungsmaterials zu einer Mischvorrichtung (30) gepreßt werden. Nachdem das Dichtungsmaterial (9) vermischt worden ist, wird es durch die Schlauchleitung (16) in den ringförmigen Raum (3) eingebracht.

Die Wirkung der Einrichtung ist folgende:

Zur Abdichtung eines Lecks (2) im Kanalrohr (1) (Fig. 1) wird der Packer (10) derart im Kanalrohr (1) angeordnet, daß der mittlere Manschettenteil (6) im Bereich des Lecks (2) liegt. Es wird jetzt mittels Preßluft die Manschette (18) aufgeblasen, so daß sich die äußeren Manschettenteile (4, 5) fest an die Innenwandung (25) des Kanalrohres (1) legen. Nunmehr wird über die Leitungen (14, 15) das Zweikomponentendichtungsmaterial (9) in die Mischvorrichtung (30) eingebracht, vermischt und über die Schlauchleitung (16) in den ringförmigen Raum (3) eingebracht und unter weiterer Druckluftzufuhr in den Raum (23). Das heißt, während des Einbringens des Zweikomponentendichtungsmateriales (9) verkleinert sich das Volumen des ringförmigen Raumes (3). Hierdurch wird das Dichtungsmaterial (9) in und durch das Leck (2) gepreßt. Liegt der mittlere Manschettenteil (6) an der Innenwandung (25) des Rohres (1) an, verbleibt zwischen ihm und der inneren Rohrwandung (25) ein dünner Klebefilm. Das Zweikomponentendichtungsmaterial (9) bindet üblicherweise in äußerst kurzer Zeit ab, so daß fast anschließend die Luft aus dem Raum (23) abgelassen werden kann. Der Packer nimmt damit die in Fig. 3 gezeigte Form und Lage ein. Er kann jetzt reibungslos an eine andere Leckstelle gefahren werden. Aus Fig. 3 ist zu erkennen, daß das Dichtungsmaterial (9) der Abdichtung (24) hauptsächlich außen auf der Rohrwandung liegt. Im Innern ist nur noch ein dünner Dichtungswulst vorhanden, welcher den Durchfluß allerdings nicht stört. Die Leckabdichtung erfolgt mit geringstmöglichem Materialverbrauch.

Der Packer ist vorn und hinten offen (Öffnungen 11, 12), so daß während des Abdichtvorganges die Abwässer weiter fließen können.

### Bezugszahlen

- 1: Kanalrohr
- 2: Leck
- 3: Ringraum
- 4: rechtes Endteil
- 5: linkes Endteil
- 6: Mittelteil
- 7: rechtes Ende
- 8: linkes Ende
- 9: Dichtungsmaterial
- 10: Packer
- 11: rechte Öffnung des Packers
- 12: linke Öffnung des Packers
- 13: Öffnung in der Manschette
- 13a: Öffnung im Stahlkörper
- 14: Schlauchleitung
- 15: Schlauchleitung
- 16: Schlauchleitung
- 17: Fadengeflecht im Mittelteil
- 17a: gestreckte Lage des Fadengeflechtes
- 18: Gummimanschette
- 19: ringförmiger Raum
- 20: Stahlkörper
- 21: Kragen
- 22: Schlauch
- 23: Hohlraum
- 24: Abdichtungsstelle
- 25: Rohrinnenwandung
- 26: Öffnung für Preßluftanschluß
- 30: Mischvorrichtung

## Patentansprüche

1. Verfahren zum Abdichten von Kanalrohren mit Hilfe eines Packers, der um die abzudichtende Stelle, beispielsweise Leckstelle, Muffenverbindung oder dergleichen mit Hilfe aufblasbarer Manschettenteile zwischen diesen einen ringförmigen Raum oder Ringraum bildet, in den ein Dichtungsmaterial eingebracht wird, welches gegen, in und/oder durch die abzudichtende Stelle gepreßt wird, bei dem während des Aufblasens der äußeren Manschettenteile zur Schaffung des Ringraumes zwischen diesen Teilen das Volumen des Ringraumes verkleinert wird, indem sich das Mittelteil während des Aufblasens weniger ausdehnt als die Manschettenteile,
**dadurch gekennzeichnet,**
a) daß, sobald die aufblasbaren Manschettenteile (4, 5) den Ringraum (3) gegen die innere Rohrwandung (1) abdichten, unter weiterer Verkleinerung des Volumens des Ringraumes (3) durch weitere Ausdehnung des Mittelteiles (6) das Dichtungsmaterial (9) in den Ringraum (3) eingebracht wird, und
b) daß während und nach Einbringen des Dichtungsmaterials (9) unter weiterer Verkleinerung des Volumens des Ringraumes (3) das eingebrachte Dichtungsmaterial (9) an, in und/oder durch die abzudichtende Stelle gepreßt wird.

2. Verfahren nach Anspruch 1, dadurch gekennzeichnet, daß das Dichtungsmaterial (9) mit Hilfe einer Schlauchleitung (16) durch eine Durchflußöffnung (13) im Mittelteil (6) in den Ringraum (3) mit Druck gepreßt wird.

3. Verfahren nach Anspruch 1, dadurch gekennzeichnet, daß das Dichtungsmaterial (9) aus einem Kleber mit wenigstens zwei Komponenten besteht.

4. Verfahren nach Anspruch 1, dadurch gekennzeichnet, daß das Dichtungsmaterial (9) mit Hilfe von Schlauchleitungen (14, 15) in eine Mischvorrichtung (30) gepreßt wird.

5. Verfahren nach Anspruch 4, gekennzeichnet durch die Verwendung eines flüssigen Mehrkomponentenklebers.

## Claims

1. Method for sealing sewer conduits by means of a packing which forms round the site to be sealed, for example leakage, socket joint or the like by means of inflatable sleeve parts between them an annular space or ring space into which a sealing material is placed, which is pressed against, into and/or through the site to be sealed, with which during the inflation of the external sleeve parts for creation of the ring space between these parts the volume of the ring space is reduced in that the central part expands less during the inflation than the sleeve parts,
**characterized in that**
a) as soon as the inflatable sleeve parts (4, 5) seal the ring space (3) against the internal sewer conduit wall (1) under further reduction of the volume of the ring space (3) through further expansion of the central part (6) the sealing material (9) is placed into the ring space (3) and
b) that during and after placement of the sealing material (9) under further reduction of the volume of the ring space (3) the placed sealing material (9) is pressed onto, into and/or through the site to be sealed.

2. Method according to claim 1, characterized in that the sealing material (9) is pressed with pressure by means of a hose-pipe (16) through a flow-through opening (13) in the central part (6) into the ring space (3).

3. Method according to claim 1, characterized in that the sealing material (9) consists of a bonding agent with at least two components.

4. Method according to claim 1, characterized in that the sealing material (9) is pressed by means of hose-pipes (14, 15) into a mixing device (30).

5. Method according to claim 4, characterized by the use of a liquid multi-component bonding agent.

## Revendications

1. Procédé pour l'étanchement de tuyaux de canalisation à l'aide d'un packer et de pièces de garniture gonflables, qui autour de l'endroit à étancher, par ex. fuite, raccord à emboîtement ou semblable, forme un espace en forme d'anneau ou espace annulaire dans lequel on met un matériau d'étanchéité qui est pressé contre, dans et/ou à travers l'endroit à étanchéifer, sachant que le volume de l'espace annulaire entre ces pièces se trouve réduit pendant le gonflage des pièces de garniture extérieures pour l'obtention de l'espace annulaire entre ces pièces, ceci étant dû au fait que, pendant l'opération de gonflage, la partie centrale se dilate moins que les pièces de garniture.
**caractérisé en ce que:**
a) dès que les pièces de garniture gonflables (4, 5) ont étanchéifié l'espace annulaire (3) contre la paroi intérieure du tuyau (1), tout en continuant à réduire le volume de l'espace annulaire (3) par la continuation de la dilatation de la pièce centrale (6) le matériau d'étanchéité (9) est mis dans l'espace annulaire (3) et
b) que pendant et après la mise en place du matériau d'étanchéité (9) , la réduction du volume de l'espace annulaire (3) continuant, le matériau d'étanchéité (9) mis en place est pressé sur, dans et/ou à travers l'endroit à étanchéifier.

2. Procédé selon la revendication 1, caractérisé en ce que le matériau d'étanchéité (9) est pressé sous pression par une ouverture de passage (13) dans la partie centrale (6) dans l'espace annulaire (3) à l'aide d'une conduite flexible (16).

3. Procédé selon la revendication 1, caractérisé en ce que le matériau d'étanchéité (9) consiste en une colle d'au moins deux composants.

4. Procédé selon la revendication 1, caractérisé en ce que le matériau d'étanchéité (9) est pressé dans un dispositif de mélange (30) à l'aide de conduites flexibles (14, 15).

5. Procédé selon la revendication 4, caractérisé par l'utilisation d'une colle liquide à plusieurs composants.
